# EUROPÄISCHE PATENTANMELDUNG

(11) **EP 3 291 269 A1**
(43) Veröffentlichungstag der Anmeldung: **07.03.2018**
(21) Anmeldenummer: 16187326.0
(22) Anmeldetag: 06.09.2016
(51) Int. Cl.: H01H 27/00, H01H 50/02

(54) **SICHERHEITSSCHALTER**

(71) Anmelder: EUCHNER GmbH + Co. KG, 70771 Leinfelden-Echterdingen (DE)
(72) Erfinder: Frank, Jürgen, 71139 Ehningen (DE); Hahn, Frederic, 71065 Sindelfingen (DE); Trivigno, Domenico, 70199 Stuttgart (DE); Zeiler, Gerd, 70771 Leinfelden-Echterdingen (DE)
(74) Vertreter: Ruckh, Rainer Gerhard

(57) **Zusammenfassung**

Die Erfindung betrifft einen Sicherheitsschalter (1) mit einem Schalterkomponenten aufnehmenden Gehäuse (2). Ein an einer Unterlage fixierbarer Befestigungssockel (8) ist vorgesehen, welcher am Gehäuse (2) fixierbar ist.

## Beschreibung

Die Erfindung betrifft einen Sicherheitsschalter.

Derartige Sicherheitsschalter werden allgemein im Bereich der Sicherheitstechnik eingesetzt. Dabei erzeugen die Sicherheitsschalter Schaltsignale, die zu Überwachungsaufgaben eingesetzt werden. Ein typischer Anwendungsfall ist die Überwachung des Zustands einer Schutzeinrichtung einer Maschine. Beispielsweise wird mit einem Sicherheitsschalter überprüft, ob eine Schutztür als Zugang zu einem Schutzraum für eine Maschine geschlossen ist oder nicht.

Ein derartiger Sicherheitsschalter weist Schalterkomponenten auf, die in einem Gehäuse integriert sind. Üblicherweise sind im Gehäuse Bohrungen vorgesehen, durch welche Befestigungsschrauben geführt werden, um den Sicherheitsschalter an einer Unterlage zu befestigen.

Ein solcher Sicherheitsschalter ist beispielsweise der CES-I-AP C04 der Firma Euchner GmbH + Co. KG.

Nachteilig hierbei ist zum einen, dass die das Gehäuse durchsetzenden Bohrungen den im Innenraum des Gehäuses zur Verfügung stehenden Einbauraum für die Schalterkomponenten einschränken oder dass die Bauform des Sicherheitsschalters durch den zusätzlich benötigten Innenraum nicht kompakt ist. Weiterhin ist nachteilig, dass bei den die Bohrungen begrenzenden Wandungen des Gehäuses Schmutzansammlungen derart auftreten, so dass über Fugen zwischen Befestigungselementen und dem Gehäuse des Sicherheitsschalters Schmutz oder Feuchtigkeit festsetzen kann.

Der Erfindung liegt die Aufgabe zugrunde, einen Sicherheitsschalter mit verbesserter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Sicherheitsschalter mit einem Schalterkomponenten aufnehmenden Gehäuse. Ein an einer Unterlage fixierbarer Befestigungssockel ist vorgesehen, welcher am Gehäuse fixierbar ist.

Der Grundgedanke der Erfindung besteht somit darin, die Elemente, die zur Befestigung des Sicherheitsschalters an einer Unterlage, das heißt an einer externen Einheit, benötigt werden, in den Befestigungssockel zu verlagern, so dass das Gehäuse des Sicherheitsschalters völlig unabhängig von den spezifischen Anforderungen einer Befestigung an einer externen Einheit gestaltet werden kann.

Insbesondere ist vorteilhaft, dass das Gehäuse des Sicherheitsschalters nicht mehr von Befestigungsbohrungen durchsetzt sein muss, durch welche Befestigungsschrauben geführt werden müssen, um den Sicherheitsschalter an einer Unterlage zu befestigen.

Dadurch, dass im Gehäuse des Sicherheitsschalters keine Befestigungsbohrungen mehr vorgesehen werden müssen, steht der komplette Innenraum des Gehäuses zur Aufnahme von Schalterkomponenten zur Verfügung. Die Schalterkomponenten können somit hinsichtlich ihrer Funktionalität optimal innerhalb des Gehäuses positioniert werden. Weiterhin kann auch die Baugröße des gesamten Sicherheitsschalters verringert werden. Schließlich werden auch Probleme mit der Verschmutzung an Befestigungsbohrungen und Schrauben vermieden.

Ein weiterer wesentlicher Aspekt der Erfindung besteht im modularen Aufbau des Sicherheitsschalters. Das Gehäuse ist völlig unabhängig von der Befestigung an der Unterlage gestaltet und ist vorteilhaft allseitig geschlossen, so dass das Gehäuse leicht von Schmutz und Partikeln gereinigt werden kann und somit hygienischen Designvorgaben entspricht. Zudem wird eine bündige Montage auf der anwendungsspezifischen Unterlage ermöglicht.

Der Befestigungssockel kann als zum Gehäuse separates Modul an die Anforderungen zur Befestigung an der Unterlage angepasst werden. Insbesondere können mehrere unterschiedliche, an die Anforderungen verschiedener Unterlagen angepasste Befestigungssockel vorgesehen sein, die wahlweise am Gehäuse des Sicherheitsschalters fixiert werden können. Durch diese applikationsspezifische Anpassung des Befestigungssockels ergibt sich eine hohe Flexibilität des Gesamtsystems. Diese Flexibilität erhöht sich auch dadurch, dass verschiedene Varianten der Befestigung des Befestigungssockels an der Unterlage möglich sind. Diese können je nach Spezifikation lösbar oder unlösbar, in Form von form-, reibungs- und stoffschlüssigen sowie adhäsiven Verbindungen erfolgen. Beispiele hierfür sind Löt-, Klebe- oder Schweißverbindungen. Die Verbindungsmöglichkeiten sind im bisherigen Stand der Technik vorrangig auf Schraubverbindungen beschränkt.

Ein weiterer wesentlicher Aspekt der Erfindung besteht darin, dass der Befestigungssockel am Gehäuse fixiert werden kann, ohne dass hierzu Eingriffe in das Gehäuse erforderlich sind.

Vorteilhaft sind hierzu an der Außenseite einer Seitenwand des Gehäuses Fixiermittel zur Fixierung des Befestigungssockels vorgesehen.

Korrespondierend hierzu sind am Befestigungssockel zu den Fixiermitteln des Gehäuses korrespondierende Fixiermittel vorgesehen.

Mit den so ausgebildeten Fixiermitteln wird vorteilhaft eine Fixierung des Gehäuses in einer exakt definierten Sollposition an dem Befestigungssockel erhalten. Dies ist eine wesentliche Voraussetzung für eine exakte und einfache Justage des Sicherheitsschalters am jeweiligen Einsatzort.

Wesentlich ist weiterhin, dass mit den Fixiermitteln eine vorzugsweise manipulationssichere Verbindung zwischen dem Befestigungssockel und dem Gehäuse erhalten wird. Die Manipulationssicherheit kann durch mechanische Mittel realisiert sein, die eine feste, bleibende Verbindung zwischen Befestigungssockel und Gehäuse bewirken. Weiterhin kann ein Manipulationsschutz auch durch zusätzliche Sensoren realisiert werden, mit denen kontrolliert wird, ob am Gehäuse ein Befestigungssockel fixiert ist oder nicht.

Gemäß einer ersten Variante können die Fixiermittel von Steck-, Rast- oder Clips-Verbindungen gebildet sein.

Dies ermöglicht eine werkzeuglose Fixierung des Gehäuses am Befestigungssockel. Vorteilhaft sind hierbei die Mittel zur Ausbildung der Steck-, Rast und Clips-Verbindungen so ausgebildet, dass mit diesem bereits die Sollposition des Gehäuses am Befestigungssockel vorgegeben wird.

Gemäß einer weiteren Variante können die Fixiermittel des Gehäuses und des Befestigungssockels durch Drehbewegungen oder Verschiebebewegung aneinander fixiert werden.

Gemäß einer besonders vorteilhaften Ausgestaltung sind an der Seitenwand des Gehäuses Führungsschienen vorgesehen. Am Befestigungssockel sind Schienenelemente vorgesehen, welche in die Führungsschienen einschiebbar sind.

Um das Gehäuse in einer definierten Sollposition am Befestigungssockel zu sichern, können den Fixiermitteln Rastmittel oder dergleichen zugeordnet sein, so dass die Schienenelemente in einer vorgegebenen Position an den Führungsschienen verrasten und so lagegesichert sind.

Diese Anordnung kann vorteilhaft dadurch erweitert werden, dass an unterschiedlichen Seitenwänden des Gehäuses Führungsschienen vorgesehen sind, so dass die Schienenelemente des Befestigungssockels wahlweise an den Führungsschienen einer der Seitenwände fixierbar sind.

Diese Anordnung ist dann vorteilhaft, wenn innerhalb des Gehäuses Schalterkomponenten, insbesondere Schaltelemente nicht mittig, sondern seitlich im Gehäuse angeordnet werden. Insbesondere bei berührungslos arbeitenden Sicherheitsschaltern wirken diese Schaltelemente mit externen Einheiten wie Betätigern zusammen. Zur Abdeckung unterschiedlicher Applikationen kann es dann erforderlich sein, dass das Schaltelement in verschiedenen Orientierungen am Befestigungssockel liegen muss, um optimal auf die externe Einheit, insbesondere den Betätiger, ausgerichtet zu sein. Dies wird auf besonders einfache Weise durch die beiden Führungsschienen am Gehäuse erreicht, da durch wahlweise Einführungen in eine der Führungsschienen die gewünschte Orientierung des Schaltelements erhalten wird.

Da bei dieser Ausführungsform immer die Führungsschienen an einer der Seitenwände ungenutzt bleiben, kann in diese ungenutzten Führungsschienen eine Abdeckplatte eingeschoben werden, so dass sich dort keine Verschmutzungen ablagern können.

Gemäß einer weiteren Variante ist das Gehäuse mit dem Befestigungssockel mittels eines Scharniers gelenkig verbunden.

Vorteilhaft hierbei ist, dass der Befestigungssockel unverlierbar mit dem Gehäuse verbunden ist. Weiterhin ist vorteilhaft, dass das Gehäuse am Befestigungssockel durch eine einfache Klappbewegung positionierbar und fixierbar ist. Da das Scharnier eine Zwangsführung ausbildet, ist ohne weitere Maßnahmen gewährleistet, dass das Gehäuse in seiner Sollposition am Befestigungssockel positioniert wird. Um das Gehäuse bleibend und fest mit dem Befestigungssockel zu verbinden, können wieder zusätzliche Rastmittel oder dergleichen vorgesehen sein.

Gemäß einer vorteilhaften Ausgestaltung der Erfindung sind am Befestigungssockel Befestigungsmittel zur Befestigung an der Unterlage vorgesehen.

Insbesondere weist der Befestigungssockel Befestigungslöcher auf, in welche Befestigungsschrauben eingeführt werden, mittels derer die Befestigung des Befestigungssockels an der Unterlage erfolgt. Bei einem System mit mehreren, applikationsspezifisch ausgebildeten Befestigungssockeln können die Anordnungen der Befestigungslöcher unterschiedlich ausgebildet sein.

Wesentlich ist, dass das auf dem Befestigungssockel fixierte Gehäuse die in die Befestigungslöcher eingeführten Befestigungsschrauben wenigstens zum Teil abdeckt, so dass ein unbefugtes Lösen der Befestigungsschrauben nicht möglich ist.

Gemäß einer vorteilhaften Ausgestaltung weist der Befestigungssockel eine Montageplatte auf, deren Größe an die Fläche der Seitenwand des Gehäuses angepasst ist.

Gemäß einer vorteilhaften Weiterbildung steht an einem Rand der Montageplatte ein Plattensegment als weiteres Bestandteil des Befestigungssockels hervor, welches an einer weiteren Wand des Gehäuses fixierbar ist.

Das Plattenelement bildet einen Flansch aus, mit dem eine zusätzliche Befestigungsmöglichkeit geschaffen wird. Weiterhin wird mit dem so ausgebildeten Befestigungssockel auf einfache Weise die Sollposition des Gehäuses dadurch definiert, dass dieses an unterschiedlich orientierten Flächen der Montageplatte und des Plattenelementes gleichzeitig anliegt.

Insbesondere bei einem quaderförmig ausgebildeten Gehäuse ist das plattenförmige Element senkrecht zur Montageplatte angeordnet.

In einer weiteren Ausführungsform wird der Befestigungssockel mit dem Loch im Plattensegment über den Stecker des elektrischen Anschlusses geschoben. Die Fixierung der Lage in der Sollposition des Befestigungssockels erfolgt über eine Mutter am Kabelende der Anschlussleitung, das an den Stecker angeschlossen wird.

Die Funktionalität des Befestigungssockels kann dadurch noch erweitert werden, dass an dem Befestigungssockel und/oder an dem Gehäuse eine Schicht aufgebracht ist, welche eine Dichtung und/oder ein schwingungsdämpfendes Element bildet.

Der erfindungsgemäße Sicherheitsschalter kann unterschiedliche elektrische Anschlüsse aufweisen, die insbesondere in Form eines Steckers oder eines Kabelschwanzes ausgebildet sein können.

Weiter vorteilhaft weist der Sicherheitsschalter zur Aufnahme der elektrischen Komponenten eine starre Leiterplatte auf, die als Einschubteil in das Gehäuse eingeführt und dort lagefixiert wird. Die starre Leiterplatte bildet ein kostengünstiges Standardbauteil. Durch die Ausbildung der Leiterplatte mit den darauf angeordneten elektronischen Komponenten als Einschubteil wird eine schnelle und einfache Montage des Sicherheitsschalters ermöglicht.

Der Sicherheitsschalter ist gemäß einer ersten Variante als berührungslos arbeitendes Schaltgerät ausgebildet. Weiterhin kann der Sicherheitsschalter mit oder ohne Zuhaltung ausgeführt sein. Allgemein kann im Gehäuse des Sicherheitsschalters ein Sensor integriert sein, der dort in beliebigen Positionen montiert werden kann.

Insbesondere ist im Gehäuse des Sicherheitsschalters eine Leseeinheit integriert, die mit einem außerhalb des Gehäuses angeordneten Betätiger zusammenwirkt.

Dabei kann die Leseeinheit eine Lesespule aufweisen, welche in beliebigen Positionen innerhalb des Gehäuses montierbar ist.

Die freie Wahl der Position der Lesespule wird dadurch ermöglicht, dass das Gehäuse des Sicherheitsschalters nicht von Befestigungsbohrungen durchsetzt wird, da erfindungsgemäß zur Befestigung an der Unterlage der externe Befestigungssockel vorgesehen ist.

Insbesondere kann die Lesespule mittig im Gehäuse angeordnet sein. Dadurch kann das Gehäuse in verschiedenen Orientierungen am Befestigungssockel angebracht werden.

Der Betätiger, der einen Transponder aufweist, ist in einem weiteren Gehäuse integriert, welches mittels eines weiteren Befestigungssockels auf einer Unterlage befestigbar ist.

Damit kann jeweils für beide Gehäuse des Sicherheitsschalters und des Betätigers dasselbe Befestigungskonzept verwendet werden.

Gemäß einer alternativen Ausgestaltung ist der erfindungsgemäße Sicherheitssensor als elektromechanisches Schaltgerät ausgebildet.

Die Erfindung wird im Folgenden anhand der Zeichnungen erläutert. Es zeigen:
- Figur 1:: Schematische Darstellung eines ersten Ausführungsbeispiels des erfindungsgemäßen Sicherheitssensors mit einem zugeordneten Betätiger.
- Figur 2a-c:: Erste Ausführungsform des Gehäuses mit einem zugeordneten Befestigungssockel.
- Figur 3a-c:: Zweite Ausführungsform des Gehäuses mit einem zugeordneten Befestigungssockel.
- Figur 4a, b:: Dritte Ausführungsform des Gehäuses mit einem zugeordneten Befestigungssockel.
- Figur 5a, b:: Vierte Ausführungsform des Gehäuses mit einem zugeordneten Befestigungssockel.
- Figur 6a, b:: Fünfte Ausführungsform des Gehäuses mit einem zugeordneten Befestigungssockel.
- Figur 7:: Gehäuse des Sicherheitsschalters mit zwei unterschiedlichen Befestigungssockeln.
- Figur 8:: Sechste Ausführungsform des Gehäuses mit einem zugeordneten Befestigungssockel.

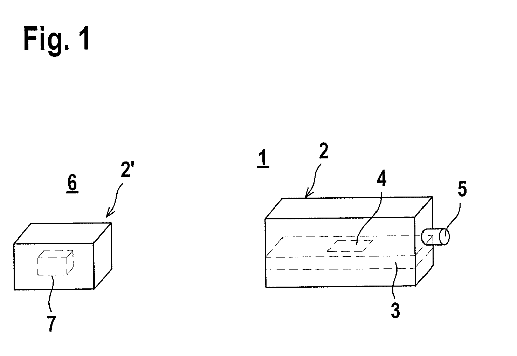

Figur 1 zeigt schematisch ein Ausführungsbeispiel eines berührungslos arbeitenden Sicherheitsschalters 1. Der Sicherheitsschalter 1 weist vorzugsweise ein quaderförmiges Gehäuse 2 zur Aufnahme von Schalterkomponenten auf. Im vorliegenden Fall ist als elektronische Baugruppe eine starre Leiterplatte 3 in Form eines Einschubteils vorgesehen, die über eine Gehäuseöffnung an einer Stirnseite des Gehäuses 2 in den Innenraum des Gehäuses 2 eingeschoben werden kann. Auf der Leiterplatte 3 befindet sich eine Lesespule 4, die eine Leseeinheit bildet sowie elektronische Komponenten, die zur Auswertung der Signale der Lesespule 4 dienen. Die Leiterplatte 3 ist im Innenraum des Gehäuses 2 lagefixiert und erstreckt sich idealerweise über die gesamte Querschnittsfläche des Innenraums. Diese Lesespule 4 sitzt mittig auf der Leiterplatte 3. Generell kann die Lesespule 4 auch seitlich auf der Leiterplatte 3 fixiert sein. Nach Einführen der Leiterplatte 3 wird die Gehäuseöffnung mit einem Deckel verschlossen, so dass das Gehäuse 2 allseitig geschlossen ist. Dieser kann auf unterschiedlichste Weise fixiert werden. An einer Seite des Gehäuses 2 mündet ein elektrischer Anschluss in Form eines Steckers 5 oder Kabelschwanzes aus. Der elektrische Anschluss dient zur Stromversorgung des Sicherheitsschalters 1 und zur Ausgabe eines im Sicherheitsschalter 1 generierten Schaltsignals.

Dem so ausgebildeten Sicherheitsschalter 1 ist ein Betätiger 6 zugeordnet, der einen Transponder 7 aufweist, der in einem ebenfalls vorzugsweise quaderförmigen Gehäuse 2' integriert ist.

In Abhängigkeit der Position des Betätigers 6 zur Lesespule 4 wird im Sicherheitsschalter 1 ein binäres Schaltsignal generiert, dessen Schaltzustände angeben, ob der Transponder 7 innerhalb des Lesebereichs der Spule ist oder nicht.

Der so ausgebildete Sicherheitsschalter 1 kann im Bereich der Sicherheitstechnik eingesetzt werden. Insbesondere kann mit dem Sicherheitsschalter 1 kontrolliert werden, ob eine Schutztür als Zugang zu einem Gefahrenbereich geschlossen ist oder nicht. Hierzu kann beispielsweise der Sicherheitsschalter 1 mit seinem Gehäuse 2 am Rahmen der Schutztür und der Betätiger 6 im Bereich der Vorderkante der Schutztür angeordnet sein. Ist die Schutztür geschlossen, befindet sich der Betätiger 6 im Lesebereich der Lesespule 4. Ist die Schutztür geöffnet, befindet sich der Betätiger 6 außerhalb des Lesebereichs der Lesespule 4.

Zur Befestigung des Gehäuses 2 des Sicherheitsschalters 1 beziehungsweise des Gehäuses 2' des Betätigers 6 ist ein Befestigungssockel 8 vorgesehen.

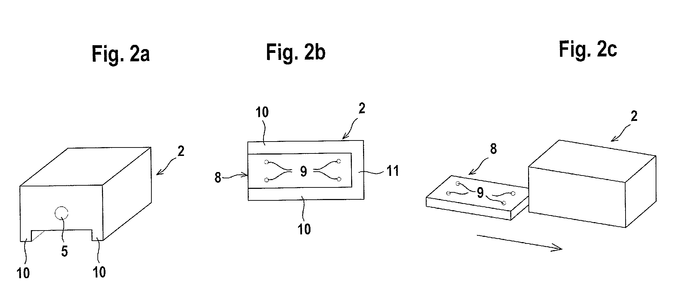

Die Figuren 2a bis 2c zeigen ein erstes Ausführungsbeispiel des Befestigungssockels 8 für das Gehäuse 2 des Sicherheitsschalters 1 und/oder Gehäuse 2' des Betätigers 6. Der Befestigungssockel 8 ist als plattenförmiger Körper ausgebildet, der vorzugsweise die Form eines flachen Quaders aufweist. Der Befestigungssockel 8 ist beispielsweise von Befestigungslöchern 9 durchsetzt. In diese Befestigungslöcher 9 können als Befestigungsmittel nicht dargestellte Befestigungsschrauben eingeführt werden, um den Befestigungssockel 8 auf einer Unterlage, zum Beispiel einem Maschinen- oder Anlagenteil, zu befestigen. Die Befestigungsschrauben können insbesondere in Form von Senkschrauben ausgeführt sein, um zu gewährleisten, dass die in den Befestigungslöchern 9 gelagerten Befestigungsschrauben nicht über die Oberseite des Befestigungssockels 8 hervorstehen.

Als Fixiermittel zur Fixierung des Gehäuses 2 am Befestigungssockel 8 sind an der Unterseite des Gehäuses 2 zwei Führungsschienen 10 vorgesehen. Die Führungsschienen 10 verlaufen entlang der längsseitigen Ränder des Gehäuses 2, wobei am hinteren Rand des Gehäuses 2 ein Randsegment 11 hervorsteht, das die Führungsschienen 10 verbindet. Die längsseitigen Ränder des Befestigungssockels 8 bilden zu den Führungsschienen 10 korrespondierende Schienenelemente aus.

Sobald der Befestigungssockel 8 mit den Befestigungsschrauben auf der Unterlage befestigt ist, wird das Gehäuse 2 durch Einschieben der Führungsschienen 10 in die Schienenelemente auf den Befestigungssockel 8 aufgeschoben, bis der vordere Rand des Befestigungssockels 8 an dem einen Anschlag bildenden Randsegment 11 anliegt. Dadurch ist die Sollposition des Gehäuses 2 auf dem Befestigungssockel 8 exakt definiert. Durch eine geeignete Formgebung der Führungsschienen 10, beispielsweise in Form von Schwalbenschwanzführungen, ist gewährleistet, dass nach Aufschieben der Führungsschienen 10 auf die Schienenelemente des Befestigungssockels 9 das Gehäuse 2 nicht vom Befestigungssockel 8 abgehoben werden kann. Weiterhin kann durch Rastmittel an den Führungsschienen 10 beziehungsweise Schienenelementen das Gehäuse 2 am Befestigungssockel 8 lagegesichert sein.

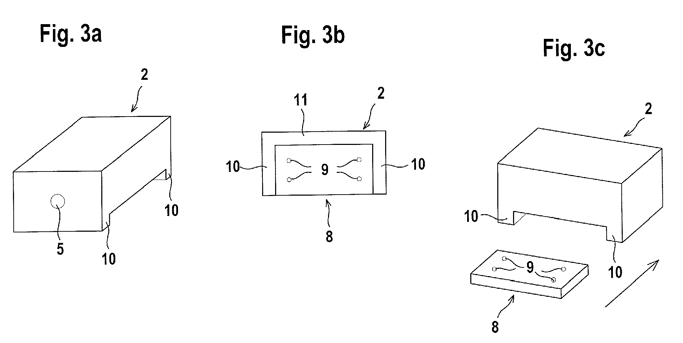

Die Ausführungsform gemäß den Figuren 3a bis 3c unterscheidet sich von dem Ausführungsbeispiel der Figuren 2a bis 2c nur dadurch, dass die Führungsschienen 10 nicht entlang der längsseitigen Ränder, sondern entlang der querseitigen Ränder des Gehäuses 2 verlaufen.

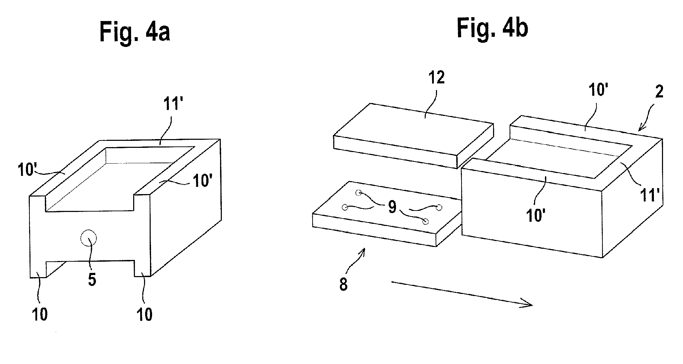

Die Ausführungsform gemäß den Figuren 4a, 4b unterscheidet sich von dem Ausführungsbeispiel der Figuren 4a bis 4c dadurch, dass neben den durch das Randsegment 11 verbundenen Führungsschienen 10 an der Unterseite des Gehäuses 2 auch an der Oberseite des Gehäuses 2 hierzu identische Führungsschienen 10', die über ein Randsegment 11' verbunden sind, vorgesehen sind.

Damit kann wahlweise das Gehäuse 2 mit den Führungsschienen 10 oder 10' auf den Befestigungssockel 8 aufgeschoben werden. Diese Wahlmöglichkeit ist insbesondere dann von Bedeutung, wenn die Lesespule 4 im Gehäuse 2 nicht mittig, sondern seitlich angeordnet ist. Durch das wahlweise Aufschieben des Gehäuses 2 auf den Befestigungssockel 8 mit den Führungsschienen 10 oder 10' kann dann die Orientierung der Lesespule 4 relativ zum Betätiger 6 angepasst werden. In die jeweils frei bleibenden Führungsschienen 10 oder 10' kann eine Abdeckplatte 12 eingeschoben werden, damit dort eine ebene Wandfläche des Gehäuses 2 erhalten wird.

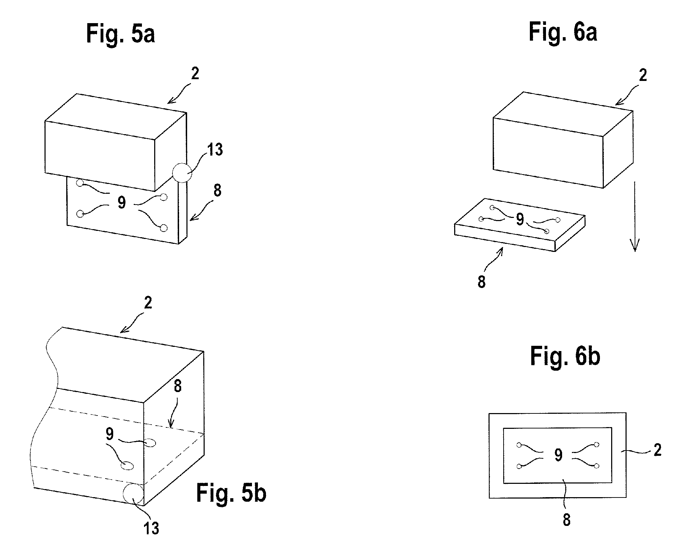

Bei der Ausführungsform der Figuren 5a, 5b ist der Befestigungssockel 8 mittels eines Scharniers 13 gelenkig mit dem Gehäuse 2 verbunden. Sobald der Befestigungssockel 8 mit den Befestigungsschrauben auf der Unterlage befestigt wird, wird das Gehäuse 2 auf den Befestigungssockel 8 geklappt (Figur 5b). Durch das Scharnier 13 ist die Klappbewegung so zwangsgeführt, dass das Gehäuse 2 in seiner Sollposition auf dem Befestigungssockel 8 aufsitzt und diesen seitlich umschließt. Dabei kann das Gehäuse 2 durch Rastmittel und dergleichen auf dem Befestigungssockel 8 lagefixiert sein.

Bei der Ausführungsform der Figuren 6a, 6b wird, sobald der Befestigungssockel 8 mit den Befestigungsschrauben auf der Unterlage befestigt ist, das Gehäuse 2 nur auf den Befestigungssockel 8 aufgesetzt, wobei die Fixierung des Gehäuses 2 durch Aufclipsen auf den Befestigungssockel 8 erfolgt.

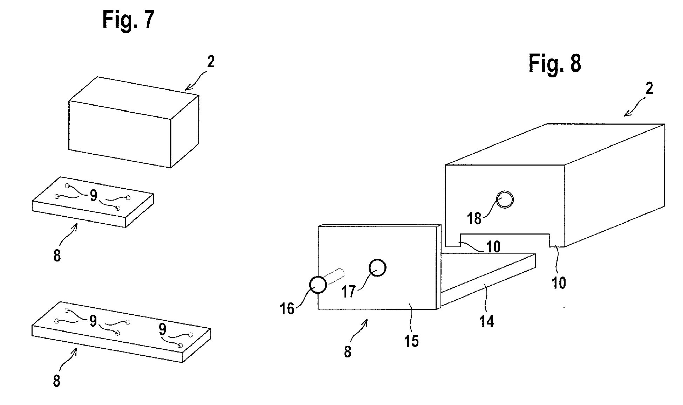

Das Gehäuse 2 und der Befestigungssockel 8 bilden ein modulares System. Dabei stellt nur der Befestigungssockel 8 ein applikationsspezifisches Teil dar. Zur Anpassung an unterschiedliche Applikationen können dem Gehäuse 2 unterschiedliche Befestigungssockel 8, 8' zugeordnet sein, wie in Figur 7 dargestellt. Ein Vorteil hierbei ist, dass weitere, nicht eingezeichnete Bauteile mit auf dem Befestigungssockel 8' angebracht werden können.

Figur 8 zeigt ein Ausführungsbeispiel, bei welchem der dem Gehäuse 2 zugeordnete Befestigungssockel 8 eine Montageplatte 14 und ein einen Flansch bildendes Plattensegment 15 aufweist. Das Plattensegment 15 steht im rechten Winkel von der Montageplatte 14 an deren längsseitigem Rand hervor. Zur Befestigung des Gehäuses 2 am Befestigungssockel 8 wird die Montageplatte 14 in die Führungsschiene 10 an der Unterseite des Gehäuses 2 eingeschoben, bis das Plattensegment 15 als Anschlag an der Stirnseite des Gehäuses 2 anliegt. Dann wird eine Schraube 16 durch ein Loch 17 des Plattensegments 15 in ein Gewinde 18 an der Stirnseite des Gehäuses 2 eingeschraubt, wodurch das Gehäuse 2 am Befestigungssockel 8 lagefixiert ist.

### Bezugszeichenliste

- (1): Sicherheitsschalter
- (2,2'): Gehäuse
- (3): Leiterplatte
- (4): Lesespule
- (5): Stecker
- (6): Betätiger
- (7): Transponder
- (8,8'): Befestigungssockel
- (9): Befestigungsloch
- (10, 10'): Führungsschiene
- (11, 11'): Randsegment
- (12): Abdeckplatte
- (13): Scharnier
- (14): Montageplatte
- (15): Plattensegment
- (16): Schraube
- (17): Loch
- (18): Gewinde

## Patentansprüche

1. Sicherheitsschalter (1) mit einem Schalterkomponenten aufnehmenden Gehäuse (2), **dadurch gekennzeichnet, dass** ein an einer Unterlage fixierbarer Befestigungssockel (8) vorgesehen ist, welcher am Gehäuse (2) fixierbar ist.

2. Sicherheitsschalter nach Anspruch 1, **dadurch gekennzeichnet, dass** das Gehäuse (2) allseitig geschlossen ist.

3. Sicherheitsschalter nach einem der Ansprüche 1 oder 2, **dadurch gekennzeichnet, dass** der Befestigungssockel (8) in einer Sollposition am Gehäuse (2) gelagert ist.

4. Sicherheitsschalter nach einem der Ansprüche 1 bis 3, **dadurch gekennzeichnet, dass** zur Fixierung des Befestigungssockels (8) an der Unterlage lösbar oder unlösbar, form-, reibungs- und stoffschlüssigen, sowie adhäsiven Verbindungen vorgesehen sind.

5. Sicherheitsschalter nach einem der Ansprüche 1 bis 4, **dadurch gekennzeichnet, dass** an der Außenseite einer Seitenwand des Gehäuses (2) Fixiermittel zur Fixierung des Befestigungssockels (8) vorgesehen sind, welche mit Fixiermitteln am Befestigungssockel (8) korrespondieren und diese Fixiermittel von Steck-, Rast- oder Clips-Verbindungen gebildet sind.

6. Sicherheitsschalter nach Anspruch 5, **dadurch gekennzeichnet, dass** an der Seitenwand des Gehäuses (2) Führungsschienen (10,10') vorgesehen sind, und dass am Befestigungssockel (8) Schienenelemente vorgesehen sind, welche in die Führungsschienen (10, 10') einschiebbar sind.

7. Sicherheitsschalter nach Anspruch 6, **dadurch gekennzeichnet, dass** an unterschiedlichen Seitenwänden des Gehäuses (2) Führungsschienen (10, 10') vorgesehen sind, so dass die Schienenelemente des Befestigungssockels (8) wahlweise an den Führungsschienen (10, 10') einer der Seitenwände fixierbar sind.

8. Sicherheitsschalter nach Anspruch 7, **dadurch gekennzeichnet, dass** in die freibleibenden Führungsschienen (10,10') eine Abdeckplatte (12) einführbar ist.

9. Sicherheitsschalter nach Anspruch 5, **dadurch gekennzeichnet, dass** das Gehäuse (2) mit dem Befestigungssockel (8) mittels eines Scharniers (13) gelenkig verbunden ist.

10. Sicherheitsschalter nach einem der Ansprüche 1 bis 9, **dadurch gekennzeichnet, dass** der Befestigungssockel (8) applikationsspezifisch ausgebildet ist.

11. Sicherheitsschalter nach einem der Ansprüche 1 bis 10, **dadurch gekennzeichnet, dass** an einem Rand der Montageplatte (14) ein Plattensegment (15) als weiterem Bestandteil des Befestigungssockels (8) hervorsteht, welches an einer weiteren Wand des Gehäuses (2) fixierbar ist.

12. Sicherheitsschalter nach einem der Ansprüche 1 bis 11, **dadurch gekennzeichnet, dass** die Verbindung zwischen diesem und dem Befestigungssockel (8) manipulationssicher ausgebildet ist.

13. Sicherheitsschalter nach einem der Ansprüche 1 bis 12, **dadurch gekennzeichnet, dass** dieser ein Einschubteil mit einer starren Leiterplatte (3) aufweist.

14. Sicherheitsschalter nach einem der Ansprüche 1 bis 13, **dadurch gekennzeichnet, dass** dieser als berührungslos arbeitendes Schaltgerät oder als elektromechanisches Schaltgerät ausgebildet ist.

15. Sicherheitsschalter nach Anspruch 14, **dadurch gekennzeichnet, dass** in dessen Gehäuse (2) ein Sensor integriert ist, der in beliebigen Positionen innerhalb des Gehäuses montierbar ist.
